# EUROPEAN PATENT SPECIFICATION

(11) **EP 2 975 759 B1**
(45) Date of publication and mention of the grant of the patent: **24.01.2024**
(21) Application number: 14765646.6
(22) Date of filing: 24.01.2014
(51) Int. Cl.: H02N 1/04

(54) **SLIDING FRICTIONAL NANO GENERATOR AND POWER GENERATION METHOD**
GLEITENDER REIBUNGSNANOGENERATOR UND STROMERZEUGUNGSVERFAHREN
NANOGÉNÉRATEUR À FRICTION DE GLISSEMENT ET PROCÉDÉ DE GÉNÉRATION DE PUISSANCE

(30) Priority: 12.03.2013 CN 201310078598
(43) Date of publication of application: 20.01.2016
(73) Proprietor: Beijing Institute of Nanoenergy and Nanosystems, Beijing 100083 (CN)
(72) Inventor: WANG, Zhonglin, Beijing 100190 (CN); ZHU, Guang, Beijing 100190 (CN); WANG, Sihong, Beijing 100190 (CN); LIN, Long, Beijing 100190 (CN); CHEN, Jun, Beijing 100190 (CN)
(74) Representative: Carpmaels & Ransford LLP
(86) International application number: PCT/CN2014/071344
(87) International publication number: WO 2014/139346

(56) References cited:
- CN-A- 103 354 429
- CN-A- 103 368 449
- CN-A- 103 368 451
- CN-U- 202 679 272
- DE-A1- 4 429 029
- US-A1- 2013 049 531
- FENG-RU FAN ET AL: "Flexible triboelectric generator", NANO ENERGY, vol. 1, no. 2, 20 January 2012 (2012-01-20), pages 328-334, XP055048851, ISSN: 2211-2855, DOI: 10.1016/j.nanoen.2012.01.004

## Description

### TECHNICAL FIELD

This invention relates to a power generator and a power generation method thereof, particularly to a triboelectric nanogenerator in which the mechanical energy of an applied external force is converted to electrical energy, as well as a power generation method using this nanogenerator.

### BACKGROUND ART

In modern days when micro-electronics and material technologies are in high-speed development, a large number of novel micro-electronic devices, which have a plurality of functions and are highly integrated, are being continuously developed, and exhibit an unprecedentedly prospect for application in various fields of daily life of human beings. However, the studies on the power supply systems used for these micro-electronic devices relatively fall behind. Generally, the power supplies of these micro-electronic devices are all from batteries directly or indirectly. Batteries do not only have larger volume and heavier weight, but also contain toxic chemicals, which are potentially harmful to the environment and human bodies. Therefore, there is an extremely important sense to develop a technology in which the naturally occurring mechanical energies such as movement and vibration are converted to electrical energy.

However, at present, the power generators capable of effectively converting the mechanical energy described above to electrical energy are all based on electromagnetic induction, in which a water turbine, a steam turbine, a diesel engine or other dynamical mechanism drives the energy generated from water flow, air flow, fuel combustion or nuclear fission to be converted to mechanical energy and conveyed to a power generator, and the mechanical energy is converted to electrical energy for use by the power generator. All of these power generators require relatively concentrated and high-intensity energy input, while the low-intensity kinetic energies generated in daily activities of human beings and occurring in nature substantially fail to be effectively converted to electrical energy. Meanwhile, the conventional power generators have larger volumes and complex structures, and cannot be used as the power supply elements of micro-electronic devices at all.

US 2013/049531 A1 discloses a generator, comprising a thin first contact charging layer and a thin second contact charging layer. The thin first contact charging layer includes a first material that has a first rating on a triboelectric series. The thin first contact charging layer has a first side with a first conductive electrode applied thereto and an opposite second side. The thin second contact charging layer includes a second material that has a second rating on a triboelectric series that is more negative than the first rating.

Fan et. al. discloses a triboelectric generator which is formed by stacking two polymer sheets made of materials having distinctly different triboelectric characteristics, with metal films deposited on the top and bottom of the assembled structure (see, Feng-Ru Fan, ET AL: "Flexible Triboelectric Generator", NANO ENERGY, Vol. 1, No. 2, Pages 328-334, January 2012). Once subjected to mechanical deformation, a friction between the two films, owing to the nano-scale roughness, generates equal amounts but opposite signs of charges at the two sides.

### SUMMARY OF THE INVENTION

In order to overcome the above problems in the prior art, this present invention provides a sliding triboelectric nanogenerator capable of converting the mechanical energy of a tangential external force applied to the triboelectric nanogenerator to electrical energy.

In order to achieve the object described above, this present invention provides a triboelectric nanogenerator, comprising:
a first friction layer;
a first conductive element disposed in contact with the lower part of the first friction layer;
a second friction layer; and
a second conductive element disposed in contact with the upper part of the second friction layer;
wherein the upper surface of the first friction layer is disposed oppositely to the lower surface of the second friction layer; and
the upper surface of the first friction layer and the lower surface of the second friction layer perform relative sliding friction tangent to the contact face between the first friction layer and the second friction layer under the action of an external force applied tangentially to the contact face while the friction area varies, and an electrical signal is output to an external circuit by the first conductive element and the second conductive element; and
at least one of the friction layers is a non-conductive oxide, a semiconductor oxide or a complex oxide, including silicon oxide, aluminum oxide, manganese oxide, chromium oxide, ferric oxide, titanium oxide, copper oxide, zinc oxide, BiO₂ or Y₂O₃.

Preferably, there is a difference in friction electrode sequence between the material of the upper surface of the first friction layer and the material of the lower surface of the second friction layer.

Preferably, the upper surface of the first friction layer is disposed in contact with the lower surface of the second friction layer.

Preferably, without the action of the external force, the upper surface of the first friction layer is separated from the lower surface of the second friction layer, and under the action of the external force, the upper surface of the first friction layer is in contact with the lower surface of the second friction layer and relative sliding friction tangent to the contact face occurs.

Preferably, the first friction layer and/or the second friction layer arc/is an insulating material or a semiconductor material.

Preferably, the insulating material is selected from polytetrafluoroethylene, polydimethylsiloxane, polyimide, polydiphenyl propane carbonate, polyethylene terephthalate, aniline-formaldehyde resin, polyformaldehyde, ethyl cellulose, polyamide, melamine formaldehyde, polyethylene glycol succinate, cellulose, cellulose acetate, polyethylene glycol adipate, polydiallyl phthalate, a regenerated fiber sponge, a polyurethane elastomer, a styrene-propylene copolymer, a styrene-butadiene copolymer, an artificial fiber, a polymethacrylate, a polyvinyl alcohol, a polyester, a polyisobutylene, a polyurethane flexible sponge, polyethylene terephthalate, polyvinyl butyral, phenol formaldehyde resin, chloroprene rubber, a butadiene-propylene copolymer, a natural rubber, polyacrylonitrile, poly(vinylidene chloride-co-acrylonitrile), polyethylene bisphenol A carbonate, polystyrene, polymethyl methacrylate, polycarbonate, a liquid crystal high-molecular polymer, polychlorobutadiene, polyacrylonitrile, polybisphenol carbonate, polychloroether, polytrifluorochloroethylene, polyvinylidene chloride, polyethylene, polypropylene, polyvinyl chloride and parylenes.

Preferably, the insulating material is selected from polystyrene, polyethylene, polypropylene, polydiphenyl propane carbonate, polyethylene terephthalate, polyimide, polyvinyl chloride, polydimethylsiloxane, polytrifluorochloroethylene, polytetrafluoroethylene and parylenes.

Preferably, the semiconductor material is selected from silicon, germanium, a Group III-Group V compound, a Group II-Group VI compound, an oxide, a solid solution composed of a Group III-Group V compound and a Group II-Group VI compound, an amorphous glass semiconductor and an organic semiconductor.

Preferably, the Group III-Group V compound is selected from gallium arsenide and gallium phosphide; the Group II-Group VI compound is selected from cadmium sulfide and zinc sulfide; the oxide is selected from an oxide of manganese, chromium, iron or copper; the solid solution composed of a Group III -V compound and a Group II-Group VI compound is selected from gallium aluminum arsenide and gallium arsenic phosphide.

Preferably, microstructures on the order of micrometer or sub-micrometer are distributed on the upper surface of the first friction layer and/or the lower surface of the second friction layer.

Preferably, the microstructures are selected from the structures of nanowires, nanotubes, nanoparticles, nanogrooves, microgrooves, nanocones, microcones, nanospheres and microspheres.

Preferably, the upper surface of the first friction layer and/or the lower surface of the second friction layer are provided with an ornament or a coating of a nanomaterial.

Preferably, the upper surface of the first friction layer and/or the lower surface of the second friction layer have been subjected to chemical modification such that a functional group prone to lose an electron is introduced to the surface of the material having a positive polarity and/or a functional group prone to gain an electron is introduced to the surface of the material having a negative polarity.

Preferably, the functional group prone to lose an electron comprises an amino group, a hydroxy group or an alkoxy group.

Preferably, the functional group prone to gain an electron comprises an acyl group, a carboxyl group, a nitro group or a sulfonic acid group.

Preferably, the upper surface of the first friction layer and/or the lower surface of the second friction layer have been subjected to chemical modification such that positive charges are introduced into the surface of the material having a positive polarity and/or negative charges are introduced into the surface of the material having a negative polarity.

Preferably, the chemical modification is achieved in a manner of introducing a charged group by chemical bonding.

Preferably, the first friction layer or the second friction layer is a conductive material.

Preferably, the conductive material constituting the first friction layer or the second friction layer is selected from a metal and a conductive oxide.

Preferably, the metal is selected from gold, silver, platinum, aluminum, nickel, copper, titanium, chromium or selenium, and an alloy formed of the above metals.

Preferably, the first conductive element and/or the second conductive element are/is selected from a metal and a conductive oxide.

Preferably, the first conductive element and/or the second conductive element are/is selected from gold, silver, platinum, aluminum, nickel, copper, titanium, chromium or selenium, and an alloy formed of the above metals.

Preferably, the first friction layer and/or the second friction layer is/are in a form of a thin film.

Preferably, the first conductive element and/or the second conductive element is/are in a form of a thin film.

Preferably, the first friction layer, the second friction layer, the first conductive layer and/or the second conductive layer is/are hard.

Preferably, the first friction layer, the second friction layer, the first conductive layer and/or the second conductive layer is/are flexible.

Preferably, the first conductive element and the second conductive element are fixed on the surfaces of the first friction layer and the second friction layer, respectively.

Preferably, the conductive element is produced on the surface of the friction layer by deposition.

Preferably, the first conductive element and the first friction layer are the same in size and shape, and/or the second conductive element and the second friction layer are the same in size and shape.

Preferably, the first friction layer, second friction layer, first conductive layer and/or the second conductive layer is/are a planar structure.

Preferably, the first conductive element and the first friction layer are curved structures, and/or, the second conductive element and the second friction layer are curved structures.

This present invention further provides a power generation method using any one of the preceding nanogenerators, comprising the steps of:
(1) providing the first friction layer and the second friction layer;
(2) on the lower part of the first friction layer and on the upper part of the second friction layer respectively, forming the first conductive element and the second conductive element disposed in contact therewith;
(3) bringing the upper surface of the first friction layer into contact with the lower surface of the second friction layer;
(4) electrically connecting the first conductive element and the second conductive element to an external circuit;
(5) applying an external force tangentially to perform relative sliding between the first friction layer and the second friction layer and to generate relative sliding friction tangent to the contact face, wherein by controlling the distance of relative sliding in the process of sliding, the first friction layer and the second friction layer are subjected to dislocation in the direction along the contact face and the area of sliding friction varies; and
(6) outputting an electrical signal to the external circuit by the first conductive element and the second conductive element.

Preferably, in step (3), the upper surface of the first friction layer and the lower surface of the second friction layer are contacted completely.

Preferably, in step (5), the force applied is a sustained external force whose direction is periodically inversed or whose magnitude is periodically changed.

When a periodic tangential external force is applied to the sliding triboelectric nanogenerator of this invention, an alternating pulse signal output may be formed between the first conductive element and the second conductive element. Compared to the prior art, the sliding triboelectric nanogenerator has the following advantages:
1. New breakthrough in principles and applications. The nanogenerator of this invention does not need any gap between two friction layers in process of operation, and is different in the principle from a device in which two friction layers are periodically in complete contact and in complete separation, which provides a completely new design idea to the society. Additionally, the gapless design omits the installation of an elastic distance maintaining piece, provides convenience for the packaging technology, and is allowed to be used in wider fields.
2. Efficient utilization of energy. The nanogenerator of this invention does not require large-scale and high-intensity energy input, as long as the input mechanical energy is capable of driving the relative sliding between the first friction layer and the second friction layer. Therefore, the mechanical energies with various intensities generated in nature and daily life of human beings may be effectively collected and are converted to electrical energy, achieving efficient utilization of energy.
3. Simple structure, good portability and high compatibility. The nanogenerator of this invention does not require members such as magnets, coils, rotors, etc., has simple structure, small volume, convenient production, and low cost, may be mounted on various devices which allow relative sliding to be generated between the first friction layer and the second friction layer, and does not require any special working environment, and thus has very high compatibility.
4. Wide applications. By subjecting the upper surface of the first friction layer and the lower surface of the second friction layer in the nanogenerator to physical modification or chemical modification, introducing nanostructure patterns or coating nanomaterials or the like, the contact charge density generated when the contact and relative sliding occur between the two friction layers under the action of the tangential external force in the triboelectric nanogenerator may be further improved, thereby improving the output capacity of the nanogenerator. Therefore, the nanogenerator of this invention may be not only used as a small power source, but also may be used for high power generation.

### BRIEF DESCRIPTION OF THE DRAWINGS

By illustration of the figures, the above and other objects, features and advantages of this invention will be clearer. Throughout all figures, the same reference numerals denote the same parts. The figures are not deliberately depicted by equal-proportion scaling according to the practical size, and the key point is to illustrate the gist of this invention.
Fig. 1 is a typical structural schematic diagram of the triboelectric nanogenerator of this present invention;
Fig. 2 is a sectional schematic diagram of the power generation principle of the triboelectric nanogenerator of this present invention;
Fig. 3 is another typical structural schematic diagram of the triboelectric nanogenerator of this present invention;
Fig. 4 is another typical structural schematic diagram of the triboelectric nanogenerator of this present invention;

### BEST MODES FOR CARRYING OUT THE INVENTION

The technical solutions in the embodiments of this invention will be described clearly and fully below in conjunction with the accompanying drawings in embodiments of this invention. Obviously, the embodiments described are merely part of the embodiments of this invention, rather than all of the embodiments. Based on the embodiments in this invention, all other embodiments obtained by those of ordinary skill in the art without performing inventive work belong to the scope protected by this invention.

Next, this present invention is described in detail in conjunction with schematic diagrams. When the embodiments of this invention are described in detail, for convenience of illustration, the schematic diagrams are merely exemplary and should not limit the scope of this present invention herein.

This present invention provides a simple-structured triboelectric nanogenerator in which the naturally occurring mechanical energies such as movement and vibration or the like are converted to electrical energy, capable of providing the matched power supplies for micro-electronic devices. The triboelectric nanogenerator of this invention converts mechanical energy of an external force to electrical energy by using the phenomenon that surface charge transfer occurs when the materials having difference in polarity of friction electrode sequence are in contact.

The "friction electrode sequence" in the present invention refers to the sequence obtained according to the attracting degree of materials for charges. At the instant when two materials are in friction, negative charges on the friction face transfer from the surface of a material having relatively positive polarity in the friction electrode sequence to the surface of a material having a relatively negative polarity in the friction electrode sequence. Heretofore, there is no uniform theory capable of completely explaining the mechanism of charge transfer. It is generally considered that such charge transfer is related to the surface work function of a material, and the charge transfer is achieved by the transfer of electrons or ions on the contact face. It is to be indicated that the friction electrode sequence is merely a statistical result based on experience. That is, as the difference between two materials in the sequence is larger, the possibility that the positive or negative polarity of charges generated after contact complies with this sequence is greater. Also, the practical results are affected by a plurality of factors, such as surface roughness of materials, environmental humidity, whether relative friction exists, and the like.

The "contact charge" in the present invention refers to the charges carried on the surfaces after two materials having difference in polarity of friction electrode sequence are in contact friction and then separated. It is generally considered that the charges are only distributed on the surface of the material, and the maximal depth of distribution is merely about 10 nanometers. It is to be indicated that the symbol of the contact charge is that of the net charge. That is, although a concentration area of negative charges may exist at local areas on the surface of the material having a positive contact charge, the symbol of the net charge on the whole surface is positive.

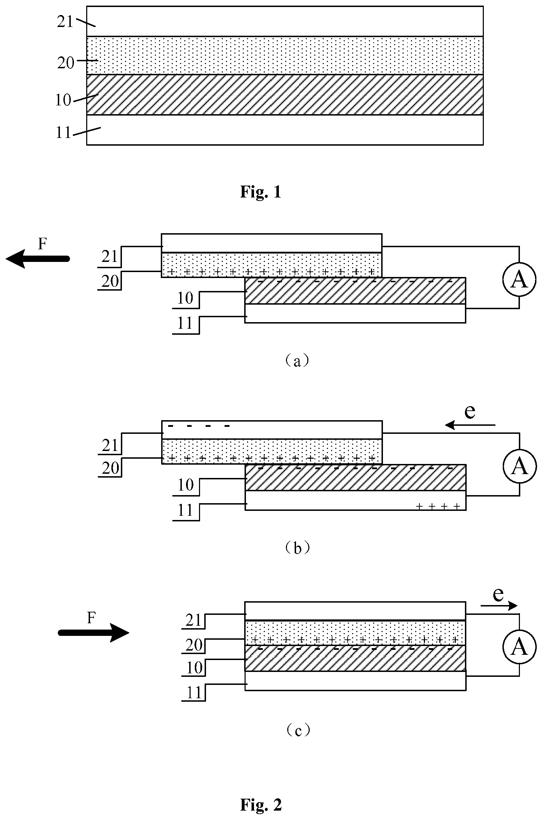

Fig. 1 is a typical structure of the triboelectric nanogenerator of this present invention. It comprises a first friction layer 10, a first conductive element 11 disposed in contact with the lower surface of the first friction layer 10, a second friction layer 20, and a second conductive element 21 disposed in contact with the upper surface of the second friction layer 20; the upper surface of the friction layer 10 is in contact with the lower surface of the second friction layer 20; and relative sliding may occur on the contact interface between the first friction layer 10 and the second friction layer 20 under the action of an external force, while the contact area changes, and therefore an electrical signal is output to an external circuit by the first conductive element 11 and the second conductive element 21.

For convenience of illustration, the principle of this invention, the fundamental for selection of various members, and the range of materials, will be described below in conjunction with the typical structure of Fig. 1. However, it is obvious that these contents are not merely limited to the embodiment shown in Fig. 1, but can be used for all technical solutions disclosed in this present invention.

The working principle of the triboelectric nanogenerator of this present invention is illustrated in conjunction with Fig. 2. When an external force is applied to allow for relative sliding friction between the upper surface of the first friction layer 10 and the lower surface of the second friction layer 20, since there is a difference in friction electrode sequence between the material of the upper surface of the first friction layer 10 and the material of the lower surface of the second friction layer 20, resulting in surface charge transfer (see Fig. 2 (a)). In order to shield the electric field formed of surface charges remained in the first friction layer 10 and the second friction layer 20 due to dislocation, the free electrons in the first conductive element 11 will flow onto the second conductive element 21 through an external circuit, thereby generating an external current (see Fig. 2 (b)). When an external force is applied in an opposite direction, relative sliding dislocation of the first friction layer 10 or the second friction layer 20 disappears, the two conductive elements return to the original state, and electrons in the second conductive element 21 flow back to the first conductive element 10, thereby providing an external current in an opposite direction. By repeating in such a way, an alternating pulse current is formed.

The phenomenon of electrification by friction has already been known, the types of materials on which electrification by friction may occur in the art are also commonly known, and it is generally known that static electricity may generate by friction, but it is proposed by this present invention for the first time with respect to power generation by sliding friction and its application in devices. By the working principle provided above in this present invention, the person skilled in the art may recognize the working mode of the sliding triboelectric nanogenerator so as to be capable of understanding the fundamental for selection of materials for various members. Selectable ranges of the materials of the members suitable for all technical solutions in the present invention are set forth below, and particular selections may be made according to practical needs upon practical application, thereby achieving the object for regulating the output property of the nanogenerator.

In this embodiment, the first friction layer 10 is disposed in contact with the second friction layer 20, and both of them are always kept in face contact, in spite of an external force applied thereto. This is the most typical structure of the nanogenerator of this present invention. The change of the friction area in the process of relative sliding friction is easily achieved by controlling the size and the relative displacement amount of the first friction layer 10 and the second friction layer 20.

However, it is not limited in this present invention that the first friction layer 10 and the second friction layer 20 are kept in face contact throughout, as long as both of them may be in contact and relative sliding friction tangent to the contact face occurs, while first friction layer 10 and second friction layer 20 may be completely separated without the action of external force. This design may satisfy the requirement for the case of intermittent power generation. Furthermore, the friction process may comprise both contact friction and sliding friction. There are a lot of technical manners to achieve this object, and a conventional member for controlling distance in the art may be employed. For example, an insulating spring is respectively connected to the lower surface of the first friction layer 10 and the upper surface of the second friction layer 20. However, it is to be noted that the spring used should not limit the relative sliding between the first friction layer 10 and the second friction layer 20. Furthermore, this embodiment is relatively advantageous to nanogenerators used in combination with other products. The first friction layer 10 and the second friction layer 20 may be respectively connected to 2 members separated from each other in another product, and the nanogenerator is brought to work using intermittent contact and relative sliding between the 2 members so as to achieve intermittent power generation.

The first friction layer 10 and the second friction layer 20 are composed of materials having different frictional electrical characteristics, which means that they are in different positions in the friction electrode sequence so that contact charges may be generated on the surface in the process of friction which occurs between them. All conventional high-molecular polymers have frictional electrical characteristics and they may be used as the materials for preparing the first friction layer 10 or the second friction layer 20 of this present invention. A few commonly-used high-molecular polymer materials are exemplified herein: polytetrafluoroethylene, polydimethylsiloxane, polyimide, polydiphenyl propane carbonate, polyethylene terephthalate, aniline-formaldehyde resin, polyformaldehyde, ethyl cellulose, polyamide, melamine formaldehyde, polyethylene glycol succinate, cellulose, cellulose acetate, polyethylene glycol adipate, polydiallyl phthalate, a regenerated fiber sponge, a polyurethane elastomer, a styrene-propylene copolymer, a styrene-butadiene copolymer, an artificial fiber, a polymethacrylates, a polyvinyl alcohol, a polyester, a polyisobutylene, a polyurethane flexible sponge, polyethylene terephthalate, polyvinyl butyral, phenol formaldehyde resin, chloroprene rubber, a butadiene-propylene copolymer, a natural rubber, polyacrylonitrile, poly(vinylidene chloride-co-acrylonitrile), polyethylene bisphenol A carbonate, polystyrene, polymethyl methacrylate, polycarbonate, a liquid crystal high-molecular polymer, polychlorobutadiene, polyacrylonitrile, polybisphenol carbonate, polychloroether, polytrifluorochloroethylene, polyvinylidene chloride, polyethylene, polypropylene, polyvinyl chloride, and parylenes. For the reason of space limit, it is not possible to exhaustively exemplify all possible materials, and only several specific polymer materials are listed herein for reference. However, it is obvious that these specific materials will not become restrictive factors of the scope of this present invention, since the person skilled in the art will easily select other similar materials according to the frictional electrical characteristics possessed by these materials under the inspiration of this invention.

With respect to insulators, both semiconductors and metals have frictional electrical characteristics in which electrons are prone to be lost, and lie at the end of the list of the friction electrode sequence. Therefore, semiconductors and metals may also be used as raw materials for preparing the first friction layer 10 or the second friction layer 20. Commonly-used semiconductors include silicon, germanium; a Group III-Group V compound, for example gallium arsenide, gallium phosphide, etc.; a Group II-Group VI compound, for example cadmium sulfide, zinc sulfide, etc.; and a solid solution composed of a Group III-Group V compound and a Group II-Group VI compound, for example gallium aluminum arsenide, gallium arsenic phosphide, etc. In addition to the crystalline semiconductors described above, amorphous glass semiconductors, organic semiconductors, etc., are also included. Non-conductive oxides, semiconductor oxides or complex oxides also have frictional electrical characteristics and may form surface charges in the process of friction, and thus are used as the friction layer of this invention, for example oxides of manganese, chromium, iron, copper, also including silicon oxide, manganese oxide, chromium oxide, ferric oxide, copper oxide, zinc oxide, BiO₂and Y₂O₃. Commonly-used metals include gold, silver, platinum, aluminum, nickel, copper, titanium, chromium or selenium, and an alloy formed of the above metals. Of course, other materials having conductive characteristics may also be used as the material of a friction layer prone to lose electrons, for example indium tin oxide ITO and doped semiconductors.

It is experimentally found that as the difference in electron-gaining capacity between the materials of the first friction layer 10 and the second friction layer 20 is larger (i.e., the difference between the positions in the sequence is larger), the electrical signal output by the nanogenerator is stronger. Therefore, suitable materials may be selected according to practical needs to prepare the first friction layer 10 and the second friction layer 20 so as to obtain a better output effect. Materials having negative polarity of friction electrode sequence are preferably polystyrene, polyethylene, polypropylene, polydiphenyl propane carbonate, polyethylene terephthalate, polyimide, polyvinyl chloride, polydimethylsiloxane, polytrifluorochloroethylene and polytetrafluoroethylene and parylenes including parylene C, parylene N, parylene D, parylene HT or parylene AF4. Materials having positive polarity of friction electrode sequence are preferably aniline-formaldehyde resin, polyformaldehyde, ethyl cellulose, polyamide nylon 11, polyamide nylon 66, woll and fabrics thereof, silk and fabrics thereof, paper, polyethylene glycol succinate, cellulose, cellulose acetate, polyethylene glycol adipate, polydiallyl phthalate, a regenerated fiber sponge, cotton and fabrics thereof, a polyurethane elastomer, a styrene-acrylonitrile copolymer, a styrene-butadiene copolymer, wood, hard rubber, an acetate, an artificial fiber, polymethyl methacrylate, a polyvinyl alcohol, a polyester, copper, aluminum, gold, silver and steel.

Physical modification may be performed on the upper surface of the first friction layer 10 and/or the lower surface of the second friction layer 20, which allows microstructure arrays on the order of micrometers or sub-micrometer to be distributed on its surface, so as to increase the contact area between the first friction layer 10 and the second friction layer 20 and thereby increasing the quantity of contact charges. Specific methods for modification include photoetching, chemical etching, plasma etching, etc. This object may also be achieved in a manner of an ornament and a coating of a nanomaterial.

Chemical modification may also be performed on the surfaces of the first friction layer 10 and/or the second friction layer 20 which are in contact with each other, so that the transfer quantity of charges at the instant of contact may be further increased, thereby increasing the contact charge density and the output power of the nanogenerator. Chemical modifications are further divided into the following two types.

According to one method, with respect to materials of the first friction layer 10 and the second friction layer 20 which are in contact with each other, a functional group which is more prone to lose electrons (i.e., a strong electron-donating group) is introduced to the surface of a material having a positive polarity, or a functional group which is more prone to gain electrons (a strong electron-withdrawing group) is introduced to the surface of a material having a negative polarity, either of which may further increase the transfer quantity of charges upon mutual sliding, thereby increasing the friction charge density and the output power of the nanogenerator. The strong electron-donating groups include: an amino group, a hydroxy group, an alkoxy group, etc.; and the strong electron-withdrawing groups include: an acyl group, a carboxyl group, a nitro group, a sulfonic acid group, etc. Conventional methods, such as plasma surface modification, etc., may be used for the introduction of functional groups. For example, a mixed gas of oxygen and nitrogen may be allowed to generate plasma under a certain power so as to introduce an amino group to the surface of the material of the friction layer.

Another method comprises introducing positive charges to the surface of the material of the friction layer having positive polarity and introducing negative charges to the surface of the material of the friction layer having a negative polarity. Specifically, it may be achieved by means of chemical bonding. For example, the surface of a PDMS friction layer may be modified with ethyl orthosilicate (simply referred to as TEOS) using a hydrolysis-condensation (simply referred to as sol-gel) method to be negatively charged. A metal gold thin film layer may also be modified with gold nanoparticles containing cetyltrimethylammonium bromide on the surface using a gold-sulfur bond structure. Since cetyltrimethylammonium bromide is a cation, the whole friction layer will become positively charged. The person skilled in the art may select the suitable modifying materials to be bonded to the material of the friction layer according to electron-gaining and electron-losing properties and the type of the chemical bond on the surface of the material of the friction layer to achieve the object of this present invention, and therefore such variations are all within the scope of this invention.

This present invention does not define that the first friction layer 10 and the second friction layer 20 must be hard materials, and flexible materials may be selected. Since the hardness of the material does not affect the effect of sliding friction between both of them, selection may be made by the person skilled in the art according to practical situations. The thicknesses of the first friction layer 10 and the second friction layer 20 do not significantly affect the implementation of this invention. It is preferable in this present invention that the friction layers are thin films or thin layers having a thickness of 50nm-5mm, preferably 100nm-2mm, more preferably 1 µm-800 µm. These thicknesses are suitable for all technical solutions in the present invention.

The first conductive element 11 and the second conductive element 21 are used as two electrodes of the nanogenerator, as long as they have the characteristic of the conducting capacity. They may be selected from metals and conductive oxides, may be a thin plate, a sheet or a thin film, and has a thickness in an optional range of 10nm-5mm, preferably 50nm-1mm, preferably 100nm-500 µm. A metal thin film is preferred, for example an aluminum film, a gold film, a copper film. Commonly-used metals include gold, silver, platinum, aluminum, nickel, copper, titanium, chromium or selenium, and alloys formed of the above metals. Commonly-used conductive oxides include indium tin oxide ITO and anion-doped semiconductors. The electrode layer is preferred to be in close contact with the surface of the corresponding friction layer to ensure transport efficiency of charges. A better manner is to form a film on the surface of the corresponding friction layer using a conductive material in a manner of deposition; and a specific deposition method may be electron beam evaporation, plasma sputtering, magnetron sputtering or vapor deposition.

The manner in which the first conductive element 11 and the second conductive element 21 are connected to an external circuit may be connection to an external circuit by a conductive wire or a metal thin film.

In order to ensure the mechanical strength of this nanogenerator, a support layer, preferably an insulating material or a semiconductor material, for example a plastic plate, a silicon wafer, etc., may be provided in contact with the lower surface of the first conductive element and/or the upper surface of the second conductive element.

This present invention docs not define that the friction layers and the conductive elements must be hard materials, and flexible materials may be selected, since the hardness of the material does not affect the effects of sliding friction and electrical signal output. For example, common animal fibers are very soft, but considerable electrostatic charges will be generated in the process of mutual friction. Therefore, the person skilled in the art may select the hard or flexible materials according to practical situations. Furthermore, the nanogenerators made of flexible materials are advantageous in that deformation will occur when a soft, light, and thin friction layer is subjected to the action of a slight external force, and this deformation will result in relative displacement between two friction layers, thereby outputting electrical signals by sliding friction. The use of flexible materials allows the nanogenerator of this invention to have very wide applications even in fields of biology and medicine. During use, a polymer material, which is ultrathin, soft, elastic and/or transparent, may also be used as a substrate for packaging to provide convenience for use and to improve strength. Obviously, all structures disclosed in this present invention may be made of corresponding ultra-soft and elastic materials so as to form flexible nanogenerators, and verbose words are omitted herein. However, various designs derived therefrom should be encompassed by the scope of this patent.

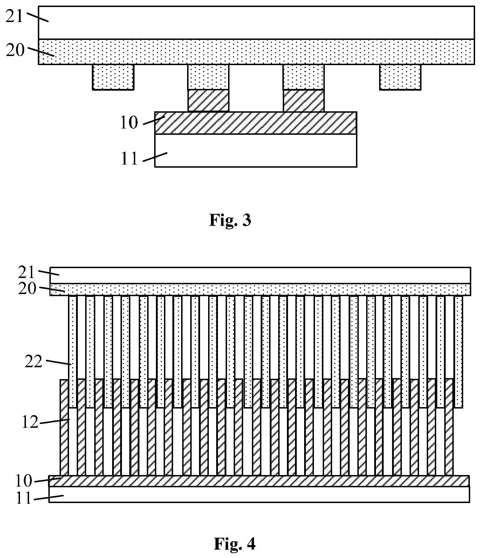

Fig. 3 is a typical embodiment of this present invention in which the two friction layers are not in complete contact. The main portion of this embodiment is the same as that of the embodiment shown in Fig. 1, and only differences between them are described herein. The upper surface of the first friction layer 10 of the embodiment shown in Fig. 3 is relatively small, and its upper surface and the lower surface of the second friction layer 20 are all produced into uneven surfaces. Change of the contact area may be generated in the process of relative sliding after they are in contact so that the object of outputting electrical signals is achieved. This embodiment may be used in the case where the magnitude of the external force or the movable space of the friction layer is not sufficient to allow the nanogenerator to output suitable electrical signals since the upper surface of the friction layer 10 is excessively small or the variable of the relative position between the first friction layer 10 and the second friction layer 20 is relatively small. By providing an uneven surface, the contact area between the first friction layer 10 and the second friction layer 20 and the effective relative displacement required for generating electrical signals are effectively controlled. The person skilled in the art can predict that this manner may be absolutely used to achieve the object of this present invention even when the surface area of the second friction layer 20 is relatively small and the provision of an uneven pattern on the surface may also be selected according to practical situations, and therefore such variations are all within the scope of this invention.

Fig. 4 is a typical embodiment of this present invention in which the friction layer is provided with microstructures. The main portion of this embodiment is the same as that of the embodiment shown in Fig. 1, and only differences between them are described herein. Linear structures on the order of micrometers 12 and 22 are respectively provided on the upper surface of the first friction layer 10 and the lower surface of the second friction layer 20 in the embodiment shown in Fig. 4. In the process where the first friction layer 10 and the second friction layer 20 are in contact, the microstructures on the surfaces thereof are interspersed and overlapped with each other, and the area of contact friction is greatly increased, so that the output property of the nanogenerator may be effectively improved. As for the specific forms of the microstructures, the person skilled in the art may select the conventional rod-like, linear, flower-shaped, etc., according to the production conditions or practical needs. Although providing microstructures on both surfaces of the two friction layers has the best effect, it is obvious that providing microstructures on one of the friction layers may also obtain a similar effect.

This present invention further provides a power generation method, particularly performing power generation using the sliding triboelectric nanogenerator described above, mainly comprising the steps of:
(1) First, a material is selected according to the aforementioned fundamental and is produced into a first friction layer 10 and a second friction layer 20 having suitable size and shape.
(2) On the lower part of the first friction layer 10 and the upper part of the second friction layer 20, a first conductive element 11 and a second conductive element 21 disposed in contact therewith are formed. Fixed disposition is preferred. For example, the first conductive element 11 and the second conductive element 21 are directly produced on the lower surface of the first friction layer 10 and the upper surface of the second friction layer 20 by a method of deposition, respectively.
(3) The lower surface of the second friction layer 20 is disposed in contact with the upper surface of the first friction layer 10 to enable sliding friction to be formed therebetween. This step is a precondition for the power generation method of this invention to be realized and also is a key point for distinguishing from the power generation by a contact-separate-type nanogenerator. In the working process of a contact-separate-type nanogenerator, a space with a variable pitch must exist between two thin film layers, and electrical signals are generated only if a contact-separate circulating action can be achieved. However, no space is required to be formed between the second friction layer 20 and the first friction layer 10 in the power generation method of this invention, and the second friction layer 20 and the first friction layer 10 are always in contact condition in the process of generating electrical signals. Preferably in the original state, the upper surface of the first friction layer 10 and the lower surface of the second friction layer 20 have the same shape and size and are in complete contact to allow the friction area to be maximal. Meanwhile, in the process of subsequent power generation, the friction area may be changed as long as an external force is applied, and thereby electrical signals are generated and output outwards.
(4) The first conductive element 11 and the second conductive element 21 are electrically connected to an external circuit. This step is a required condition for electrical energy generated by the nanogenerator to be output outwards. There are a lot of manners to achieve electrical connection, and for example, conductive wire connection is the most conventional manner. Thin layer connection may also be used, and particularly, selection may be made according to practical requirements.
(5) An external force is applied tangentially to the nanogenerator to form relative sliding between the first friction layer 10 and the second friction layer 20 and to generate relative sliding friction tangent to the contact face, while the distance of relative sliding in the process of sliding is required to be controlled so that dislocation between the first friction layer 10 and the second friction layer 20 occurs in the direction along the contact face and the area of sliding friction changes. This step is the most critical one in the power generation method of this invention. It is necessary that there are both relative sliding friction and change of friction area between the first friction layer 10 and the second friction layer 20. Only in this way, electrical signals can be output to an external circuit. It is preferable that the lower surface of the second friction layer 20 and the upper surface of the first friction layer 10 can slide freely in the direction along the contact face without restriction to improve the response sensitivity to the external force. The power generation method of this invention preferably employs a sustained external force whose direction is periodically inversed or whose magnitude is periodically changed. In this way, alternating pulse electrical signals may be continuously output to an external circuit.

As for the sustained external force whose direction is periodically inversed, its periodicity may be matched with the change of the area of relative sliding friction. The time during which the area of relative sliding friction changes from the maximum to the minimum or from the minimum to the maximum is defined as a period. In this way, it is ensured that pulse electrical signals are always being generated in the process of applying the external force, preventing the case where there is neither contact nor friction between the first friction layer 10 and the second friction layer 20 caused by unchanged direction of the external force.

As for the sustained external force whose magnitude is periodically changed, it is preferably suitable for the case where the first friction layer 10 and the second friction layer 20 can return to the original positions automatically after the external force is removed. For example, in the original state, the upper surface of the first friction layer 10 is in complete contact with the lower surface of the second friction layer 20, and the second friction layer 20 is connected to an insulating spring at one end, the first friction layer 10 and the conductive element 11 on its lower surface are kept in fixed positions. Then, an external force is applied to the other end of the second friction layer 20 so that the insulating spring is gradually drawn and the contact friction area between the second friction layer 20 and the first friction layer 10 gradually decreases. When the contact friction area decreases to the minimum, the external force is reduced, so that the second friction layer 20 returns to the original position under the action of the insulating spring, and the second friction layer 20 and the first friction layer 10 became in complete contact. Such a process is a period, and pulse electrical signals may be continuously transported to an external circuit by repeating this process.

The sliding triboelectric nanogenerator of this invention may use translational kinetic energy to allow the nanogenerator to generate electrical energy and provides power supply for small electrical appliances without supplying power by power supplies such as batteries, etc., and is a nanogenerator convenient for use. Furthermore, the triboelectric nanogenerator of this invention has a simple production method and a low production cost, and is a triboelectric nanogenerator and a nanogenerator set having a wide application range.

## Claims

1. A sliding triboelectric nanogenerator, comprising:
a first friction layer (10);
a first conductive element (11) disposed in contact with the lower part of the first friction layer (10);
a second friction layer (20); and
a second conductive element (21) disposed in contact with the upper part of the second friction layer (20);
wherein the upper surface of the first friction layer (10) is disposed oppositely to the lower surface of the second friction layer (20), and
wherein the upper surface of the first friction layer (10) and the lower surface of the second friction layer (20) perform relative sliding friction tangent to the contact face between the first friction layer (10) and the second friction layer (20) under the action of an external force applied tangentially to the contact face while the friction area varies, and an electrical signal is output to an external circuit by the first conductive element (11) and the second conductive element (21), and
**characterized in that** at least one of the friction layers is a non-conductive oxide, a semiconductor oxide or a complex oxide, including silicon oxide, aluminum oxide, manganese oxide, chromium oxide, ferric oxide, titanium oxide, copper oxide, zinc oxide, BiO₂ or Y₂O₃.

2. The nanogenerator as claimed in claim 1, wherein there is a difference in friction electrode sequence between the material consisting the upper surface of the first friction layer (10) and the material consisting the lower surface of the second friction layer (20), wherein the friction electrode sequence is the sequence obtained according to the attracting degree of materials for charges, and at the instant when two materials are in friction, negative charges on a friction face transfer from the surface of a material having relatively positive polarity in the friction electrode sequence to the surface of a material having a relatively negative polarity in the friction electrode sequence.

3. The nanogenerator as claimed in claim 1 or 2, wherein the upper surface of the first friction layer (10) is disposed in contact with the lower surface of the second friction layer (20).

4. The nanogenerator as claimed in claim 1 or 2, wherein without the action of the external force, the upper surface of the first friction layer (10) is separated from the lower surface of the second friction layer (20), and under the action of the external force, the upper surface of the first friction layer (10) is in contact with the lower surface of the second friction layer (20) and relative sliding friction tangent to the contact face occurs.

5. The nanogenerator as claimed in any one of claims 1-4, wherein microstructures on the order of micrometer or sub-micrometer are distributed on the upper surface of the first friction layer (10) and/or the lower surface of the second friction layer (20).

6. The nanogenerator as claimed in any one of claims 1-5, wherein the upper surface of the first friction layer (10) and/or the lower surface of the second friction layer (20) have been subjected to chemical modification such that a functional group prone to lose an electron is introduced to the surface of the material having a positive polarity and/or a functional group prone to gain an electron is introduced to the surface of the material having a negative polarity; or,
the upper surface of the first friction layer (10) and/or the lower surface of the second friction layer (20) have been subjected to chemical modification such that positive charges are introduced into the surface of the material having a positive polarity and/or negative charges are introduced into the surface of the material having a negative polarity.

7. The nanogenerator as claimed in any one of claims 1-6, wherein the first friction layer (10) or the second friction layer (20) is a conductive material.

8. The nanogenerator as claimed in any one of claims 1-7, wherein the first friction layer (10), the second friction layer (20), the first conductive element (11), and/or the second conductive element (21) is/are in a form of a thin film.

9. The nanogenerator as claimed in any one of claims 1-8, wherein the first friction layer (10), the second friction layer (20), the first conductive layer, and/or the second conductive layer is/are flexible.

10. The nanogenerator as claimed in any one of claims 1-9, wherein the first friction layer (10), the second friction layer (20), the first conductive layer, and/or the second conductive layer is/are a planar structure.

11. The nanogenerator as claimed in any one of claims 1-10, wherein the first conductive element (11) and the first friction layer (10) are curved structures, and/or, the second conductive element (21) and the second friction layer (20) are curved structures.

12. A power generation method using the nanogenerator of any one of claims 1-11, comprising the steps of:
(1) providing the first friction layer (10) and the second friction layer (20);
(2) on the lower part of the first friction layer (10) and on the upper part of the second friction layer (20) respectively, forming the first conductive element (11) and the second conductive element (21) disposed in contact therewith;
(3) bringing the upper surface of the first friction layer (10) into contact with the lower surface of the second friction layer (20);
(4) electrically connecting the first conductive element (11) and the second conductive element to an external circuit; and
(5) applying an external force tangentially to the contact face to perform relative sliding between the first friction layer (10) and the second friction layer (20) and to generate relative sliding friction tangent to the contact face between the first friction layer (10) and the second friction layer (20), wherein by controlling the distance of relative sliding in the process of sliding, the first friction layer (10) and the second friction layer (20) are subjected to dislocation in the direction along the contact face and the area of sliding friction varies; and
(6) outputting an electrical signal to the external circuit by the first conductive element (11) and the second conductive element (21).

## Patentansprüche

1. Gleitreibungs-Nanogenerator, umfassend:
eine erste Reibungsschicht (10);
ein erstes leitendes Element (11), das in Kontakt mit dem unteren Teil der ersten Reibungsschicht (10) angeordnet ist;
eine zweite Reibungsschicht (20); und
ein zweites leitendes Element (21), das in Kontakt mit dem oberen Teil der zweiten Reibungsschicht (20) angeordnet ist;
wobei die Oberseite der ersten Reibungsschicht (10) gegenüber der Unterseite des zweiten Reibungsschicht (20) angeordnet ist, und
wobei die Oberseite der ersten Reibungsschicht (10) und die Unterseite der zweiten Reibungsschicht (20) eine relative Gleitreibung tangential zur Kontaktfläche zwischen der ersten Reibungsschicht (10) und der zweiten Reibungsschicht (20) unter der Einwirkung einer externen Kraft, die tangential auf die Kontaktfläche ausgeübt wird, durchführen, während die Reibungsfläche variiert, und ein elektrisches Signal durch das erste leitende Element (11) und das zweite leitende Element (21) an eine externe Schaltung ausgegeben wird, und
**dadurch gekennzeichnet, dass** mindestens eine der Reibungsschichten ein nichtleitendes Oxid, ein Halbleiteroxid oder ein Komplexoxid ist, das Siliziumoxid, Aluminiumoxid, Manganoxid, Chromoxid, Eisenoxid, Titanoxid, Kupferoxid, Zinkoxid, BiO₂ oder Y₂O₃ umfasst.

2. Nanogenerator nach Anspruch 1, wobei es einen Unterschied in der Reibungselektrodenfolge zwischen dem Material, aus dem die Oberseite der ersten Reibungsschicht (10) besteht, und dem Material gibt, aus dem die Unterseite der zweiten Reibungsschicht (20) besteht, wobei die Reibungselektrodenfolge die Folge ist, die gemäß dem Anziehungsgrad von Materialien für Ladungen erhalten wird, und zu dem Zeitpunkt, zu dem die beiden Materialien in Reibung sind, negative Ladungen auf einer Reibungsfläche von der Oberfläche eines Materials mit einer relativ positiven Polarität in der Reibungselektrodenfolge auf die Oberfläche eines Materials mit einer relativ negativen Polarität in der Reibungselektrodenfolge übertragen werden.

3. Nanogenerator nach Anspruch 1 oder 2, wobei die Oberseite der ersten Reibungsschicht (10) in Kontakt mit der Unterseite der zweiten Reibungsschicht (20) angeordnet ist.

4. Nanogenerator nach Anspruch 1 oder 2, wobei ohne Einwirkung der externen Kraft die Oberseite der ersten Reibungsschicht (10) von der Unterseite der zweiten Reibungsschicht (20) getrennt ist und unter der Einwirkung der externen Kraft die Oberseite der ersten Reibungsschicht (10) mit der Unterseite der zweiten Reibungsschicht (20) in Kontakt ist und eine relative Gleitreibung tangential zur Kontaktfläche auftritt.

5. Nanogenerator nach einem der Ansprüche 1 bis 4, wobei Mikrostrukturen in der Größenordnung von Mikrometern oder Submikrometern auf der Oberseite der ersten Reibungsschicht (10) und/oder der Unterseite der zweiten Reibungsschicht (20) verteilt sind.

6. Nanogenerator nach einem der Ansprüche 1 bis 5, wobei die Oberseite der ersten Reibungsschicht (10) und/oder die Unterseite der zweiten Reibungsschicht (20) einer chemischen Modifikation unterzogen wurde/n, derart dass eine funktionelle Gruppe, die dazu neigt, ein Elektron zu verlieren, in die Oberfläche des Materials mit einer positiven Polarität eingeführt ist und/oder eine funktionelle Gruppe, die dazu neigt, ein Elektron zu gewinnen, in die Oberfläche des Materials mit einer negativen Polarität eingeführt ist; oder
die Oberseite der ersten Reibungsschicht (10) und/oder die Unterseite der zweiten Reibungsschicht (20) einer chemischen Modifikation unterzogen wurde/n, derart dass positive Ladungen in die Oberfläche des Materials mit einer positiven Polarität eingeführt sind und/oder negative Ladungen in die Oberfläche des Materials mit einer negativen Polarität eingeführt sind.

7. Nanogenerator nach einem der Ansprüche 1 bis 6, wobei es sich bei der ersten Reibungsschicht (10) oder der zweiten Reibungsschicht (20) um ein leitendes Material handelt.

8. Nanogenerator nach einem der Ansprüche 1 bis 7, wobei die erste Reibungsschicht (10), die zweite Reibungsschicht (20), das erste leitende Element (11) und/oder das zweite leitende Element (21) in Form eines Dünnfilms ist/sind.

9. Nanogenerator nach einem der Ansprüche 1 bis 8, wobei die erste Reibungsschicht (10), die zweite Reibungsschicht (20), die erste leitende Schicht und/oder die zweite leitende Schicht flexibel ist/sind.

10. Nanogenerator nach einem der Ansprüche 1 bis 9, wobei die erste Reibungsschicht (10), die zweite Reibungsschicht (20), die erste leitende Schicht und/oder die zweite leitende Schicht planare Strukturen ist/sind.

11. Nanogenerator nach einem der Ansprüche 1 bis 10, wobei das erste leitende Element (11) und die erste Reibungsschicht (10) gekrümmte Strukturen sind und/oder das zweite leitende Element (21) und die zweite Reibungsschicht (20) gekrümmte Strukturen sind.

12. Stromerzeugungsverfahren unter Verwendung des Nanogenerators nach einem der Ansprüche 1 bis 11, umfassend die folgenden Schritte:
(1) Bereitstellen der ersten Reibungsschicht (10) und der zweiten Reibungsschicht (20);
(2) Bilden des ersten leitenden Elements (11) und des zweiten leitenden Elements (21) auf dem unteren Teil der ersten Reibungsschicht (10) bzw. auf dem oberen Teil der zweiten Reibungsschicht (20) in Kontakt damit angeordnet;
(3) Bringen der Oberseite der ersten Reibungsschicht (10)in Kontakt mit der Unterseite des zweiten Reibungsschicht (20);
(4) elektrisches Verbinden des ersten leitenden Elements (11) und des zweiten leitenden Elements mit einer externen Schaltung; und
(5) Ausüben einer externen Kraft tangential auf die Kontaktfläche, um relatives Gleiten zwischen der ersten Reibungsschicht (10) und der zweiten Reibungsschicht (20) durchzuführen und eine relative Gleitreibung tangential zur Kontaktfläche zwischen der ersten Reibungsschicht (10) und der zweiten Reibungsschicht (20) zu erzeugen, wobei durch Steuern des Abstands des relativen Gleitens im Gleitprozess die erste Reibungsschicht (10) und die zweite Reibungsschicht (20) einer Verschiebung in der Richtung entlang der Kontaktfläche unterzogen werden und die Gleitreibungsfläche variiert; und
(6) Ausgeben eines elektrischen Signals durch das erste leitende Element (11) und das zweite Element (21) an die externe Schaltung.

## Revendications

1. Nanogénérateur triboélectrique coulissant, comprenant :
une première couche de friction (10) ;
un premier élément conducteur (11) disposé en contact avec la partie inférieure de la première couche de friction (10) ;
une seconde couche de friction (20) ; et
un second élément conducteur (21) disposé en contact avec la partie supérieure de la seconde couche de friction (20) ;
la surface supérieure de la première couche de friction (10) étant disposée de manière opposée à la surface inférieure de la seconde couche de friction (20), et
la surface supérieure de la première couche de friction (10) et la surface inférieure de la seconde couche de friction (20) exerçant une friction de glissement relative tangente à la face de contact entre la première couche de friction (10) et la seconde couche de friction (20) sous l'action d'une force externe appliquée tangentiellement à la face de contact tandis que la surface de friction varie, et un signal électrique étant émis vers un circuit externe par le premier élément conducteur (11) et le second élément conducteur (21), et
**caractérisé en ce qu'**au moins une des couches de friction est un oxyde non conducteur, un oxyde semi-conducteur ou un oxyde complexe, comprenant l'oxyde de silicium, l'oxyde d'aluminium, l'oxyde de manganèse, l'oxyde de chrome, l'oxyde ferrique, l'oxyde de titane, l'oxyde de cuivre, l'oxyde de zinc, le BiO₂ ou le Y₂O₃.

2. Nanogénérateur selon la revendication 1, une différence existant dans la séquence des électrodes de friction entre le matériau constituant la surface supérieure de la première couche de friction (10) et le matériau constituant la surface inférieure de la seconde couche de friction (20), la séquence des électrodes de friction étant la séquence obtenue en fonction du degré d'attraction des matériaux pour les charges, et à l'instant où deux matériaux sont en friction, des charges négatives sur une face de friction se transférant de la surface d'un matériau ayant une polarité relativement positive dans la séquence des électrodes de friction à la surface d'un matériau ayant une polarité relativement négative dans la séquence des électrodes de friction.

3. Nanogénérateur selon la revendication 1 ou 2, la surface supérieure de la première couche de friction (10) étant disposée en contact avec la surface inférieure de la seconde couche de friction (20).

4. Nanogénérateur selon la revendication 1 ou 2, sans l'action de la force externe, la surface supérieure de la première couche de friction (10) étant séparée de la surface inférieure de la seconde couche de friction (20), et sous l'action de la force externe, la surface supérieure de la première couche de friction (10) étant en contact avec la surface inférieure de la seconde couche de friction (20) et une friction de glissement relative tangente à la face de contact se produisant.

5. Nanogénérateur selon l'une quelconque des revendications 1 à 4, des microstructures de l'ordre du micromètre ou du sous-micromètre étant réparties sur la surface supérieure de la première couche de friction (10) et/ou sur la surface inférieure de la seconde couche de friction (20).

6. Nanogénérateur selon l'une quelconque des revendications 1 à 5, la surface supérieure de la première couche de friction (10) et/ou la surface inférieure de la seconde couche de friction (20) ayant été soumises à une modification chimique telle qu'un groupe fonctionnel susceptible de perdre un électron est introduit à la surface du matériau ayant une polarité positive et/ou un groupe fonctionnel susceptible de gagner un électron est introduit à la surface du matériau ayant une polarité négative ; ou,
la surface supérieure de la première couche de friction (10) et/ou la surface inférieure de la seconde couche de friction (20) ayant été soumises à une modification chimique telle que des charges positives sont introduites à la surface du matériau ayant une polarité positive et/ou des charges négatives sont introduites à la surface du matériau ayant une polarité négative.

7. Nanogénérateur selon l'une quelconque des revendications 1 à 6, la première couche de friction (10) ou la seconde couche de friction (20) étant un matériau conducteur.

8. Nanogénérateur selon l'une quelconque des revendications 1 à 7, la première couche de friction (10), la seconde couche de friction (20), le premier élément conducteur (11) et/ou le second élément conducteur (21) se présentant sous la forme d'un film mince.

9. Nanogénérateur selon l'une quelconque des revendications 1 à 8, la première couche de friction (10), la seconde couche de friction (20), la première couche conductrice et/ou la seconde couche conductrice étant flexible(s).

10. Nanogénérateur selon l'une quelconque des revendications 1 à 9, la première couche de friction (10), la seconde couche de friction (20), la première couche conductrice et/ou la seconde couche conductrice étant une structure plane.

11. Nanogénérateur selon l'une quelconque des revendications 1 à 10, le premier élément conducteur (11) et la première couche de friction (10) étant des structures incurvées, et/ou le second élément conducteur (21) et la seconde couche de friction (20) étant des structures incurvées.

12. Procédé de production d'énergie utilisant le nanogénérateur selon l'une quelconque des revendications 1 à 11, comprenant les étapes de :
(1) la fourniture de la première couche de friction (10) et de la seconde couche de friction (20) ;
(2) sur la partie inférieure de la première couche de friction (10) et sur la partie supérieure de la seconde couche de friction (20) respectivement, la formation du premier élément conducteur (11) et du second élément conducteur (21) disposés en contact avec eux ;
(3) la mise en contact de la surface supérieure de la première couche de friction (10) avec la surface inférieure de la seconde couche de friction (20) ;
(4) a connexion électriquement du premier élément conducteur (11) et du second élément conducteur à un circuit externe ; et
(5) l'application d'une force externe tangentiellement à la face de contact pour effectuer un glissement relatif entre la première couche de friction (10) et la seconde couche de friction (20) et pour générer une friction de glissement relative tangente à la face de contact entre la première couche de friction (10) et la seconde couche de friction (20), en commandant la distance de glissement relatif dans le processus de glissement, la première couche de friction (10) et la seconde couche de friction (20) étant soumises à une dislocation dans la direction le long de la face de contact et la zone de friction de glissement variant ; et
(6) l'émission d'un signal électrique vers le circuit externe par le premier élément conducteur (11) et le second élément conducteur (21).
